# EUROPEAN PATENT APPLICATION

(11) **EP 4 734 618 A1**
(43) Date of publication of application: **29.04.2026**
(21) Application number: 23942663.8
(22) Date of filing: 25.06.2023
(51) Int. Cl.: H04W 52/02, H04W 4/70

(54) **INFORMATION TRANSMISSION METHOD AND APPARATUS, COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/102129
(87) International publication number: WO 2025/000129

(57) **Abstract**

Embodiments of the present disclosure provide an information transmission method and apparatus, a communication device, a communication system, and a storage medium. An access network device sends first information, the first information being used for indicating a task configuration of an Internet of Things (IoT) task, wherein the IoT task is executed when a terminal is at least in an RRC non-connected state, the terminal is associated with a reader for backscatter transmission in the IoT task, and the RRC non-connected state comprises an RRC idle state and/or an RRC inactive state. According to the technical solution provided by the embodiments of the present disclosure, rapid and low-cost deployment of passive IoT is realized, and the objective of power saving of the terminal is achieved.

## Description

### TECHNICAL FIELD

The present disclosure relates to the technical field of communication, and in particular, to an information transmission method and apparatus, a communication device, a communication system and a storage medium.

### BACKGROUND

In the Internet of Things (IoT) network, traditional IoT devices are usually powered by batteries. The emergence of a large number of IoT devices has pushed maintenance expenses, including labor costs and battery costs, to a whole new level. A large number of batteries are discarded every year, and only a small portion can be effectively recycled, which has a harmful impact on the earth's ecosystem. In some extreme environmental conditions, it can be very challenging to maintain the operation of the IoT network and replace batteries.

### SUMMARY

As the functionality of terminals increases, the energy consumption of the terminals increases, resulting in weak battery life.

Embodiments of the present disclosure provide an information transmission method and apparatus, a communication device, and a storage medium.

According to the first aspect of the embodiments of the present disclosure, an embodiment of the present disclosure provides an information transmission method, where the method is performed by an access network device, and the method includes:
sending first information, where the first information is used to indicate a task configuration of an Internet of Things (IoT) task, the IoT task is for execution when a terminal is at least in an RRC non-connected state, the terminal is associated with a reader of backscatter transmission in the IoT task, and the RRC non-connected state includes: an RRC idle state and/or an RRC inactive state.

According to the second aspect of the embodiments of the present disclosure, an embodiment of the present disclosure provides an information transmission method, where the method is performed by a terminal, and the method includes:
receiving first information, where the first information is used to indicate a task configuration of an Internet of Things (IoT) task, the IoT task is for execution when the terminal is at least in an RRC non-connected state, the terminal is associated with a reader of backscatter transmission in the IoT task, and the RRC non-connected state includes: an RRC idle state and/or an RRC inactive state.

According to the third aspect of the embodiments of the present disclosure, an embodiment of the present disclosure provides an information transmission method, where the method is performed by a core network device, and the method includes:
sending a task request associated with an IoT task, where the task request is used to trigger an access network device to send first information, and the first information is used to indicate a task configuration of the Internet of Things (IoT) task, where the IoT task is for execution when a terminal is at least in an RRC non-connected state, the terminal is associated with a reader of backscatter transmission in the IoT task, and the RRC non-connected state includes: an RRC idle state and/or an RRC inactive state.

According to the fourth aspect of the embodiments of the present disclosure, an embodiment of the present disclosure provides an information transmission method, where the method is performed by a communication system, and the method includes:
an access network device sending first information, where the first information is used to indicate the task configuration of an Internet of Things (IoT) task, the IoT task is for execution when a terminal is at least in an RRC non-connected state, the terminal is associated with a reader of backscatter transmission in the IoT task, and the RRC non-connected state includes: an RRC idle state and/or an RRC inactive state.

According to the fifth aspect of the embodiments of the present disclosure, an embodiment of the present disclosure provides a first information transmission apparatus, where the first information transmission apparatus includes:
a first transceiver module, configured to send first information, where the first information is used to indicate a task configuration of an Internet of Things (IoT) task, the IoT task for execution when a terminal is at least in an RRC non-connected state, the terminal is associated with a reader of backscatter transmission in the IoT task, and the RRC non-connected state includes: an RRC idle state and/or an RRC inactive state.

According to the sixth aspect of the embodiments of the present disclosure, an embodiment of the present disclosure provides a second information transmission apparatus, where the second information transmission apparatus includes:
a second transceiver module, configured to receive first information, where the first information is used to indicate a task configuration of an Internet of Things (IoT) task, the IoT task is for execution when a terminal is at least in an RRC non-connected state, the terminal is associated with a reader of backscatter transmission in the IoT task, and the RRC non-connected state includes: an RRC idle state and/or an RRC inactive state.

According to the seventh aspect of the embodiments of the present disclosure, an embodiment of the present disclosure provides a third information transmission apparatus, where the third information transmission apparatus includes:
a third transceiver module, configured to send a task request associated with an IoT task, where the task request is used to trigger an access network device to send first information, and the first information is used to indicate a task configuration of an Internet of Things (IoT) task, where the IoT task is for execution when a terminal is at least in an RRC non-connected state, the terminal is associated with a reader of backscatter transmission in the IoT task, and the RRC non-connected state includes: an RRC idle state and/or an RRC inactive state.

According to the eighth aspect of the embodiments of the present disclosure, an embodiment of the present disclosure provides a communication system, where the information transmission system includes a terminal, an access network device and a core network device; the access network device is configured to implement the information transmission method described in the first aspect, the terminal is configured to implement the information transmission method of the second aspect, and the core network device is configured to implement the information transmission method described in the third aspect.

According to the ninth aspect of the embodiments of the present disclosure, an embodiment of the present disclosure provides a communication device, where the communication device includes:
one or more processors;
where the processor is configured to call instructions so that the communication device performs the information transmission method described in the first aspect, the second aspect, or the third aspect.

According to the tenth aspect of the embodiments of the present disclosure, an embodiment of the present disclosure provides a storage medium, where the storage medium stores instructions, and when the instructions are executed on a communication device, the communication device performs the information transmission method described in the first aspect, the second aspect, or the third aspect.

The technical solutions provided by the embodiments of the present disclosure realize the rapid and low-cost deployment of the passive Internet of Things, while achieving the purpose of power saving of the terminal.

It should be understood that the foregoing general description and the following detailed description are exemplary and explanatory only and are not restrictive of the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the embodiments of the present disclosure.
FIG. 1a is a schematic diagram showing an architecture of a communication system according to an exemplary embodiment;
FIG. 1b is a schematic diagram of backscattering according to an exemplary embodiment;
FIG. 1c is a schematic diagram of a network topology architecture according to an exemplary embodiment;
FIG. 1d is a schematic diagram of a network topology architecture according to an exemplary embodiment;
FIG. 1e is a schematic diagram of a network topology architecture according to an exemplary embodiment;
FIG. 1f is a schematic diagram of a network topology architecture according to an exemplary embodiment;
FIG. 1g is a schematic diagram of ambient Internet of Things types according to an exemplary embodiment;
FIG. 2a is a schematic flowchart of an information transmission method according to an exemplary embodiment;
FIG. 2b is a schematic flowchart of an information transmission method according to an exemplary embodiment;
FIG. 3a is a schematic flowchart of an information transmission method according to an exemplary embodiment;
FIG. 3b is a schematic flowchart of an information transmission method according to an exemplary embodiment;
FIG. 4a is a schematic flowchart of an information transmission method according to an exemplary embodiment;
FIG. 4b is a schematic flowchart of an information transmission method according to an exemplary embodiment;
FIG. 4c is a schematic flowchart of an information transmission method according to an exemplary embodiment;
FIG. 4d is a schematic flowchart of an information transmission method according to an exemplary embodiment;
FIG. 5a is a schematic flowchart of an information transmission method according to an exemplary embodiment;
FIG. 6a is a schematic structural diagram of a first information transmission apparatus according to an exemplary embodiment;
FIG. 6b is a schematic structural diagram of a second information transmission apparatus according to an exemplary embodiment;
FIG. 6c is a schematic structural diagram of a third information transmission apparatus according to an exemplary embodiment;
FIG. 7a is a schematic structural diagram of a UE according to an exemplary embodiment;
FIG. 7b is a schematic structural diagram of a communication device according to an exemplary embodiment.

### DETAILED DESCRIPTION

Embodiments of the present disclosure provide an information transmission method and apparatus, a communication device, a communication system, and a storage medium.

In the first aspect, an embodiment of the present disclosure provides an information transmission method, where the method is performed by an access network device, and the method includes:
sending first information, where the first information is used to indicate a task configuration of an Internet of Things (IoT) task, the IoT task is for execution when the terminal is at least in an RRC non-connected state, the terminal is associated with a reader of backscatter transmission in the IoT task, and the RRC non-connected state includes: an RRC idle state and/or an RRC inactive state.

In the above embodiment, the access network device indicates the task configuration of the IoT task for the terminal to execute in the RRC non-connected state, so that the terminal can execute the IoT task in the RRC non-connected state, realizing fast and low-cost deployment of the passive Internet of Things, while achieving the purpose of power saving of the terminal.

In combination with some embodiments of the first aspect, in some embodiments, sending the first information includes at least one of the following:
sending a system message carrying the first information, where the system message is at least received by the terminal in the RRC non-connected state;
sending a dedicated signaling carrying the first information, where the dedicated signaling is received by the terminal in the RRC connected state.

In the above embodiment, the first information is carried in a system message or a dedicated signaling, and the access network device can indicate to the terminal in the RRC connected state and the terminal in the RRC non-connected state, thereby improving the indication flexibility.

In combination with some embodiments of the first aspect, in some embodiments, the method further includes:
sending paging information, where the paging information carries second information, and the second information is at least used to indicate the terminal in the RRC non-connected state to receive the first information carried by the system message.

In the above embodiment, for the terminal in the RRC non-connected state, the second information carried in the paging information indicates the terminal to receive the first information, so that the terminal in the non-connected state can receive the first information.

In combination with some embodiments of the first aspect, in some embodiments, the paging information carries indication information indicating a terminal identifier, and the second information is at least used to indicate the terminal corresponding to the terminal identifier to receive the first information carried by the system message;

The paging information does not carry the indication information indicating the terminal identifier, and the second information is at least used to indicate all the terminals that meet a predetermined condition to receive the first information carried in the system message.

In the above embodiment, the paging information may indicate all terminals to receive the first information, or may indicate a terminal with a specific terminal identifier to receive the first information, thereby improving the flexibility of indication.

In conjunction with some embodiments of the first aspect, in some embodiments,
the terminal identifier associated with the IoT task is obtained from a core network device.

In the above embodiment, the paging information may indicate the terminal with the terminal identifier associated with the IoT task to receive the first information, thereby improving the accuracy of indication.

In combination with some embodiments of the first aspect, in some embodiments, the second information is further used to indicate a state of the first information, where the state of the first information includes at least one of the following:
the first information is released;
the first information is updated;
the first information terminates.

In the above embodiment, the second information may provide an additional indication, thereby improving the utilization efficiency of signaling.

In combination with some embodiments of the first aspect, in some embodiments, the paging information includes at least one of the following: paging downlink control information (DCI); a paging message.

In the above embodiment, different paging information may be used to carry the second information, thereby improving the flexibility of indication of the second information.

In combination with some embodiments of the first aspect, in some embodiments, sending the first information includes:
receiving a task request associated with the IoT task sent by a core network device, and sending the first information.

In the above embodiment, the access network device sends the first information based on the task request associated with the IoT task, thereby reducing the blindness of sending the first information and improving the communication efficiency.

In conjunction with some embodiments of the first aspect, in some embodiments, the task configuration includes:
a task identifier of the IoT task;
an execution time configuration of the IoT task;
an identifier of the IoT device associated with the IoT task;
an indication of allowing the terminal in the RRC non-connected state to execute the IoT task;
an indication of a data transmission delay sensitivity of the IoT task;
a communication resource configuration of a communication cell associated with the IoT task.

In the above embodiment, the access network device indicates the terminal to perform the configuration required for the IoT task through task configuration, thereby improving the reliability of the terminal in performing the IoT task.

In combination with some embodiments of the first aspect, in some embodiments, the terminal being associated with a reader of backscatter transmission in the IoT task and/or the terminal meeting a condition, includes at least one of the following:
the terminal is authorized to be the reader;
the terminal expects or agrees to become the reader;
the terminal supports being the reader;
the terminal signs up to be the reader.

In the above embodiment, the access network device needs to determine whether the terminal has the capability to become a reader before allocating the IoT task.

In combination with some embodiments of the first aspect, in some embodiments, the method further includes:
receiving an authorization request reported by the terminal, where the authorization request indicates at least one of the following:
the terminal expects or agrees to become the reader;
the terminal supports being the reader.

In the above embodiment, the access network device receives the authorization request, and can then perform subsequent authorization operations.

In combination with some embodiments of the first aspect, in some embodiments, the method further includes:
sending authorization information to the terminal, where the authorization information indicates that the terminal is authorized to be the reader.

In the above embodiment, the access network device sends the authorization information for the terminal to confirm that the terminal becomes a reader.

In the second aspect, an embodiment of the present disclosure provides an information transmission method, where the method is performed by a terminal, and the method includes:
receiving first information, where the first information is used to indicate a task configuration of an Internet of Things (IoT) task, the IoT task is for execution when the terminal is at least in an RRC non-connected state, the terminal is associated with a reader of backscatter transmission in the IoT task, and the RRC non-connected state includes: an RRC idle state and/or an RRC inactive state.

In the above embodiment, the terminal receives the task configuration of the IoT task executed in the RRC non-connected state, so that the terminal can execute the IoT task in the non-connected state, realizing fast and low-cost deployment of the passive Internet of Things, while achieving the purpose of power saving of the terminal.

In conjunction with some embodiments of the second aspect, in some embodiments, receiving the first information includes at least one of the following:
receiving a system message carrying the first information, where the system message is at least received by the terminal in the RRC non-connected state;
receiving a dedicated signaling carrying the first information, where the dedicated signaling is received by the terminal in an RRC connected state.

In the above embodiment, the first information is carried in a system message or a dedicated signaling, and both the terminal in the RRC connected state and the terminal in the RRC non-connected state can obtain the first information, thereby improving the reliability of receiving the first information.

In conjunction with some embodiments of the second aspect, in some embodiments, the method further includes:
receiving paging information, where the paging information carries second information, and the second information is at least used to indicate the terminal in the RRC non-connected state to receive the first information carried by the system message.

In the above embodiment, for the terminal in the RRC non-connected state, the terminal indicates to receive the first information through the second information carried in the paging information, so that the terminal in the non-connected state can receive the first information.

In combination with some embodiments of the second aspect, in some embodiments, the paging information carries indication information indicating a terminal identifier, and the second information is at least used to indicate the terminal corresponding to the terminal identifier to receive the first information carried by the system message;

The paging information does not carry indication information indicating the terminal identifier, and the second information is at least used to indicate all the terminals that meet a predetermined condition to receive the first information carried in the system message.

In the above embodiment, the paging information may indicate all terminals to receive the first information, or may indicate a terminal with a specific terminal identifier to receive the first information, thereby improving the flexibility of the indication.

In combination with some embodiments of the second aspect, in some embodiments, the terminal identifier is obtained by the access network device from the core network device, and the terminal identifier is associated with the IoT task.

In the above embodiment, the paging information may indicate the terminal with the terminal identifier associated with the IoT task to receive the first information, thereby improving the accuracy of the indication.

In conjunction with some embodiments of the second aspect, in some embodiments, the second information is further used to indicate a state of the first information, where the state of the first information includes at least one of the following:
the first information is released;
the first information is updated;
the first information terminates.

In the above embodiment, the second information may provide an additional indication, thereby improving the utilization efficiency of signaling.

In combination with some embodiments of the second aspect, in some embodiments, the paging information includes at least one of the following: paging downlink control information (DCI); a paging message.

In the above embodiment, different paging information may be used to carry the second information, thereby improving the flexibility of indication of the second information.

In conjunction with some embodiments of the second aspect, in some embodiments, the task configuration includes:
a task identifier of the IoT task;
an execution time configuration of the IoT task;
an identifier of the IoT device associated with the IoT task;
an indication of allowing the terminal in the RRC non-connected state to execute the IoT task;
an indication of the data transmission delay sensitivity of the IoT task;
a communication resource configuration of a communication cell associated with the IoT task.

In the above embodiment, the access network device indicates the terminal to perform the configuration required for the IoT task through task configuration, thereby improving the reliability of the terminal in performing the IoT task.

In conjunction with some embodiments of the second aspect, in some embodiments, the terminal being associated with a reader of backscatter transmission in an IoT task and/or the terminal meeting a condition, includes at least one of the following:
the terminal is authorized to be the reader;
the terminal expects or agrees to become the reader;
the terminal supports being the reader;
the terminal signs up to be the reader.

In the above embodiment, the terminal needs to determine that the terminal needs to have the capability to become a reader before it can receive the IoT task.

In conjunction with some embodiments of the second aspect, in some embodiments, the method further includes:
sending an authorization request to an access network device or a core network device, where the authorization request indicates at least one of the following:
the terminal expects or agrees to become the reader;
the terminal supports being the reader.

In the above embodiment, the terminal sends an authorization request, so that the access network device or the core network device can perform subsequent authorization operations.

In conjunction with some embodiments of the second aspect, in some embodiments, the method further includes:
receiving authorization information sent by the access network device or the core network device, where the authorization information indicates that the terminal is authorized to become the reader.

In the above embodiment, the terminal can confirm that the terminal becomes a reader through the authorization information.

In the third aspect, an embodiment of the present disclosure provides an information transmission method, where the method is performed by a core network device, and the method includes:
sending a task request associated with an IoT task, where the task request is used to trigger an access network device to send first information, and the first information is used to indicate a task configuration of an Internet of Things (IoT) task, where the IoT task is for execution when the terminal is at least in an RRC non-connected state, the terminal is associated with a reader of backscatter transmission in the IoT task, and the RRC non-connected state includes: an RRC idle state and/or an RRC inactive state.

In the above embodiment, the core network device triggers the access network device to send the first information through the task request associated with the IoT task, reducing the blindness of sending the first information and improving the communication efficiency. The first information indicates the task configuration of the IoT task for the terminal to execute in the RRC non-connected state, so that the terminal can execute the IoT task in the non-connected state, realizing the rapid and low-cost deployment of the passive Internet of Things, while achieving the purpose of power saving of the terminal.

In conjunction with some embodiments of the third aspect, in some embodiments, the first information is carried in at least one of the following:
a system message, where the system message is at least received by the terminal in the RRC non-connected state;
a dedicated signaling, where the dedicated signaling is received by the terminal in the RRC connected state.

In the above embodiment, the first information is carried in a system message or a dedicated signaling, and the first information can be indicated to the terminal in the RRC connected state and the terminal in the RRC non-connected state, thereby improving the flexibility of indication.

In combination with some embodiments of the third aspect, in some embodiments, the task request is used to trigger the access network device to send paging information, where the paging information carries second information, and the second information is at least used to indicate the terminal in the RRC non-connected state to receive the first information carried by the system message.

In the above embodiment, for the terminal in the RRC non-connected state, the second information carried in the paging information indicates the terminal to receive the first information, so that the terminal in the non-connected state can receive the first information.

In combination with some embodiments of the third aspect, in some embodiments, the paging information carries indication information indicating a terminal identifier, and the second information is at least used to indicate the terminal corresponding to the terminal identifier to receive the first information carried by the system message;

The paging information does not carry indication information indicating the terminal identifier, and the second information is at least used to indicate all the terminals that meet a predetermined condition to receive the first information carried in the system message.

In the above embodiment, the paging information may indicate all terminals to receive the first information, or may indicate a terminal with a specific terminal identifier to receive the first information, thereby improving the flexibility of the indication.

In combination with some embodiments of the third aspect, in some embodiments, the terminal identifier is obtained by the access network device from the core network device, and the terminal identifier is associated with the IoT task.

In the above embodiment, the paging information may indicate the terminal with the terminal identifier associated with the IoT task to receive the first information, thereby improving the accuracy of the indication.

In combination with some embodiments of the third aspect, in some embodiments, the second information is further used to indicate a state of the first information, where the state of the first information includes at least one of the following:
the first information is released;
the first information is updated;
the first information terminates.

In the above embodiment, the second information may provide an additional indication, thereby improving the utilization efficiency of signaling.

In combination with some embodiments of the third aspect, in some embodiments, the paging information includes at least one of the following: paging downlink control information (DCI); a paging message.

In the above embodiment, different paging information may be used to carry the second information, thereby improving the flexibility of indication of the second information.

In conjunction with some embodiments of the third aspect, in some embodiments, the task configuration includes:
a task identifier of the IoT task;
an execution time configuration of the IoT task;
an identifier of the IoT device associated with the IoT task;
an indication of allowing the terminal in the RRC non-connected state to execute the IoT task;
an indication of the data transmission delay sensitivity of the IoT task;
a communication resource configuration of a communication cell associated with the IoT task.

In the above embodiment, the task configuration indicates the configuration required for the terminal to perform the IoT task, thereby improving the reliability of the terminal in performing the IoT task.

In combination with some embodiments of the third aspect, in some embodiments, the terminal being associated with a reader of backscatter transmission in an IoT task and/or the terminal meeting a predetermined condition, includes at least one of the following:
the terminal is authorized to be the reader;
the terminal expects or agrees to become the reader;
the terminal supports being the reader;
the terminal signs up to be the reader.

In the above embodiment, it is necessary to determine that the terminal needs to have the capability to become a reader before allocating the IoT task.

In conjunction with some embodiments of the third aspect, in some embodiments, the method further includes:
receiving an authorization request reported by the terminal, where the authorization request indicates at least one of the following:
the terminal expects or agrees to become the reader;
the terminal supports being the reader.

In the above embodiment, the core network device receives the authorization request, so that subsequent authorization operations can be performed.

In conjunction with some embodiments of the third aspect, in some embodiments, the method further includes:
sending authorization information to the terminal, where the authorization information indicates that the terminal is authorized to be the reader.

In the above embodiment, the core network device sends authorization information for the terminal to confirm that the terminal becomes a reader.

In the fourth aspect, an embodiment of the present disclosure provides an information transmission method, which is performed by a communication system, and the method includes:
the access network device sending first information, where the first information is used to indicate a task configuration of an Internet of Things (IoT) task, the IoT task is for execution when the terminal is at least in an RRC non-connected state, the terminal is associated with a reader of backscatter transmission in the IoT task, and the RRC non-connected state includes: an RRC idle state and/or an RRC inactive state.

In the fifth aspect, an embodiment of the present disclosure provides a first information transmission apparatus, where the first information transmission apparatus includes:
a first transceiver module, configured to send first information, where the first information is used to indicate a task configuration of an Internet of Things (IoT) task, the IoT task is for execution when the terminal is at least in an RRC non-connected state, the terminal is associated with a reader of backscatter transmission in the IoT task, and the RRC non-connected state includes: an RRC idle state and/or an RRC inactive state.

In the sixth aspect, an embodiment of the present disclosure provides a second information transmission apparatus, where the second information transmission apparatus includes:
a second transceiver module, configured to receive first information, where the first information is used to indicate a task configuration of an Internet of Things (IoT) task, the IoT task is for execution when the terminal is at least in an RRC non-connected state, the terminal is associated with a reader of backscatter transmission in the IoT task, and the RRC non-connected state includes: an RRC idle state and/or an RRC inactive state.

In the seventh aspect, an embodiment of the present disclosure provides a third information transmission apparatus, where the third information transmission apparatus includes:
a third transceiver module, configured to send a task request associated with an IoT task, where the task request is used to trigger an access network device to send first information, and the first information is used to indicate a task configuration of an Internet of Things (IoT) task, where the IoT task is for execution when the terminal is at least in an RRC non-connected state, the terminal is associated with a reader of backscatter transmission in the IoT task, and the RRC non-connected state includes: an RRC idle state and/or an RRC inactive state.

In the eighth aspect, an embodiment of the present disclosure provides a communication system, where the information transmission system includes a terminal, an access network device and a core network device; the access network device is configured to implement the information transmission method described in the first aspect, the terminal is configured to implement the information transmission method described in the second aspect, and the core network device is configured to implement the information transmission method described in the third aspect.

In the ninth aspect, an embodiment of the present disclosure provides a communication device, where the communication device includes:
one or more processors;
the processor is configured to call instructions so that the communication device performs the information transmission method described in the first aspect, the second aspect, or the third aspect.

In the tenth aspect, an embodiment of the present disclosure provides a storage medium, where the storage medium stores instructions, and when the instructions are executed on a communication device, the communication device performs the information transmission method described in the first aspect, the second aspect, or the third aspect.

It is understandable that the first information transmission apparatus, the second information transmission apparatus, the communication device, the communication system, the storage medium, the program product, and the computer program are all used to perform the methods provided by the embodiments of the present disclosure. Therefore, the beneficial effects that can be achieved can refer to the beneficial effects in the corresponding methods, which will not be repeated here.

The embodiments of the present disclosure provide an information transmission method and apparatus, a communication device, a communication system, and a storage medium. In some embodiments, the terms, such as information transmission method, information processing method, information transmission method, can be replaced with each other, the terms, such as information transmission apparatus, information processing apparatus, information transmission apparatus, can be replaced with each other, and the terms, such as communication system, information processing system, can be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined, for example, some or all of the steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", "one or more", or "at least one", etc. For example, when using articles such as "a", "an", "the" in English in translation, the noun after the article may be understood as a singular expression or a plural expression.

In the embodiments of the present disclosure, "plurality/multiple" refers to two or more.

In some embodiments, terms such as "at least one of", "one or more", "a plurality of", "multiple" and the like can be used interchangeably.

In some embodiments, the recording manners, such as "at least one of A and B", "A and/or B", "A in one case, B in another case", "one case A, another case B", may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also similar.

In some embodiments, the recording manner, such as "A or B", may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also similar.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first apparatus" as an example, the number of "apparatus" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, terms such as "...", "determine...", "in the case of...", "at the time of...", "when...", "if...", "in case...", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatuses and the like may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as apparatuses included in the network (e.g., an access network device, a core network device, etc.).

In some embodiments, the terms "access network device (AN device), "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and so on can be used interchangeably.

In some embodiments, the terms "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like can be used interchangeably.

In some embodiments, the access network device, the core network device, or the network device can be replaced by a terminal. For example, the various embodiments of the present disclosure can also be applied to a structure in which the communication between the access network device, the core network device, or the network device and the terminal is replaced by the communication between multiple terminals (for example, device-to-device (D2D), vehicle-to-everything (V2X), etc.). In this case, it can also be set as a structure in which the terminal has all or part of the functions of the access network device. In addition, terms such as "uplink" and "downlink" can also be replaced by terms corresponding to the communication between terminals (for example, "side"). For example, uplink channels, downlink channels, etc. can be replaced by side channels, and uplinks, downlinks, etc. can be replaced by side links.

In some embodiments, the terminal may be replaced by an access network device, a core network device, or a network device. In this case, the access network device, the core network device, or the network device may also be configured to have a structure that has all or part of the functions of the terminal.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, and any columns may also be implemented as an independent embodiment.

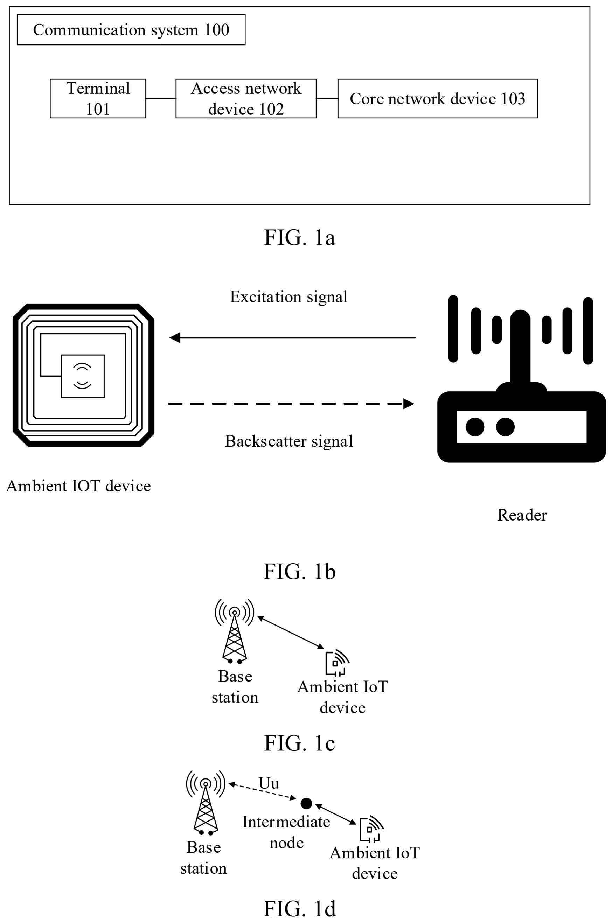

FIG. 1a is a schematic diagram showing the architecture of a communication system according to an embodiment of the present disclosure.

As shown in FIG. 1a, a communication system 100 includes a terminal 101, an access network device 102 and a core network device 103.

In some embodiments, the terminal 101 includes, for example, at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the access network device 102 may be, for example, a node or device that accesses a terminal to a wireless network. The access network device may include at least one of an evolved Node B (eNB), a next generation evolved Node B (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but is not limited thereto.

In some embodiments, the technical solutions of the present disclosure may be applicable to the Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may be composed of a central unit (CU) and a distributed unit (DU), where the CU may also be called a control unit. The CU-DU structure may be used to split the protocol layer of the access network device, with some functions of the protocol layer being centrally controlled by the CU, and the remaining part or all of the functions of the protocol layer being distributed in the DU, and the DU being centrally controlled by the CU, but not limited thereto.

In some embodiments, the core network device 103 may be one device, or may be multiple devices or a group of devices. The core network may include, for example, at least one of an Evolved Packet Core (EPC), a 5G Core Network (5GCN), and a Next Generation Core (NGC).

It can be understood that the communication system described in the embodiments of the present disclosure is for the purpose of more clearly illustrating the technical solutions of the embodiments of the present disclosure, and does not constitute a limitation on the technical solutions provided by the embodiments of the present disclosure. A person skilled in the art can know that with the evolution of the system architecture and the emergence of new service scenarios, the technical solutions provided by the embodiments of the present disclosure are also applicable to similar technical problems.

The following embodiments of the present disclosure may be applied to the communication system 100 shown in FIG. 1a, or part of the subjects, but are not limited thereto. The subjects shown in FIG. 1a are examples, and the communication system may include all or part of the subjects in FIG. 1a, or may include other subjects other than FIG. 1a, and the number and form of the subjects are arbitrary, and the connection relationship between the subjects is an example, and the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, the fourth generation mobile communication system (4G), the fifth generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device to Device (D2D) system, Machine to Machine (M2M) system, Internet of Things (IoT) system, Vehicle to Everything (V2X), systems using other communication methods, and next-generation systems expanded based on them. In addition, a combination of multiple systems (for example, a combination of LTE or LTE-A with 5G, etc.) may also be applied.

Ambient-powered IoT is a technology that can meet the above unmet needs. The ambient-powered IoT device can be an IoT apparatus powered by energy harvesting, without batteries or with limited energy storage capabilities (e.g. using capacitors), and provides energy by harvesting radio waves, light, motion, heat, or any other suitable power source.

The energy obtained from the environment can drive the data transmission and wireless communication of sensing nodes. The current mainstream low-power IoT communication chips (such as BLE, LoRa, NB-IoT) have a transmit and receive power consumption of tens of milliwatts or even hundreds of milliwatts, while the energy obtained by ambient energy harvesting is only in the microwatt level, which is unable to drive these types of nodes to work. Therefore, a new wireless communication technology is needed to reduce the communication energy consumption to tens of microwatts or even less than ten microwatts.

The methods that can be used include backscatter communications technology.

As shown in FIG. 1b, the backscatter communications can use the principle of radio frequency (RF) signal backscattering to design extremely low-power modulation and transmission technology. The reader sends an excitation signal to the ambient IOT device. Since a part of the excitation signal may be reflected when it reaches the ambient IOT device, the ambient IOT device can adjust the matching between the receiving antenna and the impedance according to the information to be sent, enhance the reflection of the incident excitation signal, and modulate the sensed data obtained by itself onto the reflected signal to complete the data transmission. This process is similar to a reflector. Compared with other communication technologies, the backscatter communication does not require a complex RF structure, reduces the use of power amplifiers, high-precision crystal oscillators, duplexers, high-precision filters and other devices, and does not require complex baseband processing. Therefore, it can simplify terminal design and significantly reduce terminal node costs.

Here, the reader may be a network node of a wireless communication network, such as a base station or the like.

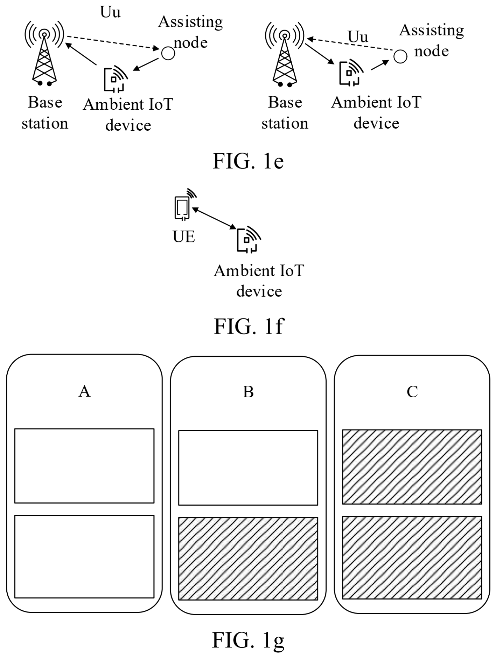

The network topology architecture for the backscatter communication can include one of the following:
Topology architecture 1: As shown in FIG. 1c, uplink (UL) and downlink (DL) data transmission is directly performed between the ambient IoT device (or IoT device for short) and the base station.
Topology architecture 2: As shown in FIG. 1d, DL and UL data transmission is performed indirectly between the ambient IoT device and the base station; there is an intermediate node (or assisting node) in the middle for forwarding. For example, the intermediate node may be a relay, an integrated access backhaul (IAB), a terminal, a user equipment (UE), and a repeater (RP).
Topology architecture 3: As shown in FIG. 1e, the ambient IOT device and the base station directly receive or transmit data in DL or UL; then there is an assisting node on UL or DL, and the assisting node is responsible for receiving or sending UL or receiving DL data. For example, the assisting node may be a relay, IAB, terminal, repeater.
Topology architecture 4: As shown in FIG. 1f, DL and UL data reception and transmission are performed directly between the ambient IOT device and the terminal; the terminal is responsible for collecting data and forwarding the collected data to the network side.

As shown in FIG. 1g, Ambient IOT devices can be divided into three types:
Device A: has no energy storage, cannot generate/amplify signals independently, and can only perform backscatter transmission.
Device B: has energy storage, cannot generate signals independently, and can only perform backscatter transmission. The use of stored energy can include amplification of the backscatter signal.
Device C: has energy storage and can generate signals independently, that is, has an active radio frequency (RF) component for transmission.

In some embodiments, in order to quickly deploy passive Internet of Things and enable low-cost deployment, a passive Internet of Things data collection method based on the terminal as an anchor point is proposed. As a reader, the terminal does not necessarily need to collect data for reporting in real time. It can be cached on the terminal side, and after the terminal enters the RRC connected state, the data reporting and routing forwarding are uniformly executed. The terminal does not need to maintain the RRC connected state all the time because of a small packet of data collection, which can achieve the purpose of power saving of the terminal. Therefore, how to support the terminal in the RRC idle state and/or the terminal in the RRC inactive state as a reader is a problem that needs to be solved. For example, how to obtain the relevant configuration and how to perform reporting are issues that need to be clarified.

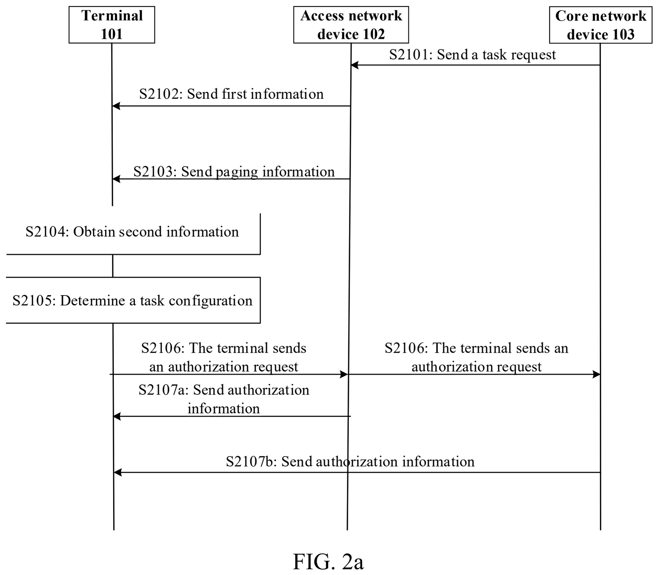

FIG. 2a is an interactive schematic diagram of an information transmission method according to an embodiment of the present disclosure. As shown in FIG. 2a, the embodiment of the present disclosure relates to an information transmission method, which is used in the communication system 100, and the method includes the following steps.

In **step S2101,** the core network device sends a task request to the access network device.

In some embodiments, the access network device receives a task request sent by the core network device.

In some embodiments, the access network device may include: a base station.

In some embodiments, the task request is associated with an IoT task.

In some embodiments, the IoT task includes, but is not limited to, requiring to report ambient IOT data.

In some embodiments, when the core network device has a requirement relating to triggering reporting of the IOT data, it sends a task request to the access network device.

In some embodiments, the task request is used to trigger the access network device to send first information to the terminal.

In some embodiments, the external IoT task function sends an IoT task request to the core network device, and the core network device sends a task request to the access network device based on the IoT task request.

In some embodiments, the external IoT task function may be an external IoT task server.

In some embodiments, the core network device sends a task request indicating at least one of the following: an IoT task, a terminal identifier associated with the IoT task, and whether the IoT task allows the terminal to execute in an RRC non-connected state.

In **step S2102,** the access network device sends first information.

In some embodiments, the terminal receives first information sent by the access network device.

In some embodiments, the first information is used to indicate a task configuration of the IoT task.

In some embodiments, the IoT task is executed when the terminal is at least in an RRC non-connected state.

In some embodiments, the IoT task is executed when the terminal is in an RRC non-connected state.

In some embodiments, the IoT data obtained by executing the IoT task when the terminal is in an RRC non-connected state can be reported to the network side (access network device and/or core network device) after the terminal switches to an RRC connected state.

The terminal may be in the RRC non-connected state when executing the IoT task, thereby reducing the power consumption caused by the terminal executing the IoT task in the RRC connected state. Fast and low-cost deployment of passive Internet of Things is realized by the terminal.

In some embodiments, the terminal is associated with a reader of backscatter transmission in the IoT task.

In some embodiments, the terminal is associated with a reader of backscatter transmission in the IoT task, including at least one of the following: the terminal is authorized to be a reader; the terminal expects or agrees to be a reader; the terminal supports becoming a reader; the terminal signs up to become a reader of backscatter communication.

In some embodiments, the access network device and/or the core network device may authorize the terminal to become a reader.

In some embodiments, the terminal may indicate to the access network or the core network in the RRC connected state that the terminal agrees or expects to become a reader.

In some embodiments, the terminal indicates to the access network or the core network that the terminal has the capability of becoming a reader, that is, supports becoming a reader.

In some embodiments, the terminal may sign up to become a reader of scatter communication during the registration process to the network.

In some embodiments, the terminal may sign up to become a reader of scatter communication after the registration process to the network.

In some embodiments, the reader is used for at least one of the following: sending the excitation signal of the backscatter transmission; receiving a backscatter signal of the backscatter transmission, and determining data information carried by the backscatter signal; and transmitting the data information carried by the backscatter signal.

In some embodiments, the RRC non-connected state includes: an RRC idle state and/or an RRC inactive state.

In some embodiments, the IoT task may include at least one of the following:
the terminal sending an excitation signal to an ambient IOT device (referred to as IoT device);
the terminal receiving data information sent by the IoT device;
the terminal sending data information obtained from the IoT device to the network side (access network device and/or core network device).

In some embodiments, the ambient IoT data may be acquired by the IoT device.

In some embodiments, the IoT device includes at least one of the following: a tag device, a sensor device, etc.

In some embodiments, the terminal is used to send an excitation signal to the IoT device and receive a backscatter signal sent by the IoT device based on the excitation signal.

In some embodiments, the IoT device is used to send a backscatter signal based on the excitation signal sent by the terminal.

In some embodiments, the frequency band of the excitation signal sent by the terminal belongs to the frequency band of cellular mobile communication.

In some embodiments, the excitation signal may provide energy to the IoT device for backscatter.

In some embodiments, the access network device sends a system message carrying the first information.

In some embodiments, the system message is at least received by the terminal in an RRC non-connected state.

In some embodiments, the task configuration includes at least one of the following: a task identifier of the IoT task; an execution time configuration of the IoT task; an identifier of the IoT device associated with the IoT task; an indication of allowing the terminal in the RRC non-connected to execute the IoT task; an indication of the data transmission delay sensitivity of the IoT task; and a communication resource configuration of the communication cell associated with the IoT task.

In some embodiments, the execution time configuration of the IoT task includes at least one of the following: start time of the IoT task, end time of the IoT task.

In some embodiments, the indication of data transmission delay sensitivity of the IoT task is used to indicate at least one of the following: whether the delay of data reporting of the IoT task is sensitive, and a delay level of data reporting of the IoT task.

In some embodiments, the communication cell associated with the IoT task may be an area that the terminal can cover as a reader.

In some embodiments, the communication resource configuration of the communication cell associated with the IoT task includes at least one of the following:
identification information of the communication cell;
frequency information of the communication cell;
spectrum range information of the communication cell;
channel information of the communication cell;
sub-channel configuration information of the communication cell.

In some embodiments, after becoming a reader, the terminal may broadcast the communication resource configuration of the communication cell associated with the IoT task to the IoT device for communication between the IoT device and the terminal.

In some embodiments, the indication of allowing a terminal in an RRC non-connected state to execute an IoT task may use different values to indicate whether the IoT task is allowed to be executed by a UE in a non-connected state.

In some embodiments, step S2101 is omitted, and the access network device autonomously sends the function indicated by the first information.

In **step S2103,** the access network device sends paging information.

In some embodiments, the terminal receives paging information sent by the access network device.

In some embodiments, the access network device sends paging information via paging DCI.

In some embodiments, the access network device sends the paging information via a paging message.

In some embodiments, the paging information sent by the access network device carries second information.

In some embodiments, the second information is at least used to indicate a terminal in an RRC non-connected state to receive the first information carried in the system message.

In some embodiments, the paging message information sent by the access network device carries indication information indicating the terminal identifier.

In some embodiments, the terminal identifier carried in the paging message information is used to indicate a terminal that needs to receive the second information.

In some embodiments, the terminal identifier carried in the paging message information includes: a terminal identifier associated with the IoT task.

In some embodiments, the terminal identifier associated with the IoT task is sent by the core network device to the access network device.

In some embodiments, after receiving the paging information, the terminal corresponding to the terminal identifier receives the first information according to the indication of the second information.

In some embodiments, the paging message information sent by the access network device does not carry indication information indicating the terminal identifier.

In some embodiments, the paging message information does not carry indication information indicating the terminal identifier, and the second information is at least used to indicate a terminal that meets a predetermined condition to receive the first information carried in the system message.

In some embodiments, a terminal that meets a predetermined condition includes at least one of the following: the terminal is authorized to be a reader; the terminal expects or agrees to be a reader; the terminal supports becoming a reader; the terminal signs up to become a reader for scatter communication.

In some embodiments, the access network device and/or the core network device may authorize the terminal to become a reader.

In some embodiments, the terminal may indicate to the access network or the core network in the RRC connected state that the terminal agrees or expects to become a reader.

In some embodiments, the terminal indicates to the access network or the core network that the terminal has the capability of becoming a reader, that is, supports becoming a reader.

In some embodiments, the terminal may sign up as a reader of scatter communication during the registration process to the network.

In some embodiments, the terminal may sign up to become a reader of scatter communication after the registration process to the network.

In some embodiments, the reader is used for at least one of the following: sending an excitation signal of the backscatter transmission; receiving a backscatter signal of the backscatter transmission and determining data information carried by the backscatter signal; and transmitting data information carried by the backscatter signal.

In some embodiments, the second information is further used to indicate the state of the first information, where the state of the first information includes at least one of the following: the first information is released; the first information is updated; the first information terminates.

In some embodiments, the second information may indicate the state of the first information through different values.

In some embodiments, the execution order of step S2102 and step S2103 is not specific.

In some embodiments, the access network device may first execute step S2102 and then execute step S2103.

In some embodiments, the access network device may first execute step S2103 and then execute step S2102.

In **step S2104,** the terminal obtains the second information.

In some embodiments, the terminal in the RRC non-connected state receives the second information via a system message.

In some embodiments, the terminal acquires the second information carried in the paging information by monitoring the paging information.

In some embodiments, the paging information carries a terminal identifier, and the terminal determines that the paging information contains its own terminal identifier, and then determines that it needs to receive the first information in the system message according to an indication of the second information.

In some embodiments, the paging information carries a terminal identifier, and the terminal determines that the paging information does not contain its own terminal identifier, and the second information may be ignored.

In some embodiments, the paging information does not carry a terminal identifier, and the terminal meets a predetermined condition, and it needs to receive the first information in the system message according to an indication of the second information.

In some embodiments, the paging information does not carry the terminal identifier, and the terminal does not meet the predetermined condition, and then the second information can be ignored.

In **step S2105,** the terminal determines the task configuration.

In some embodiments, the terminal determines the task configuration based on an indication of the first information.

In some embodiments, based on the task configuration, the terminal can execute the IoT task configured by the task configuration in the RRC non-connected state.

In some embodiments, based on the task configuration, the terminal may also execute the IoT task configured by the task configuration in the RRC non-connected state.

In some embodiments, the terminal executes the IoT task configured by the task configuration, obtains data sent by the IoT device, and sends the data to the network side (access network device or core network device).

In **step S2106,** the terminal sends an authorization request.

In some embodiments, the authorization request indicates at least one of: the terminal expects or agrees to become the reader; the terminal supports becoming a reader.

In some embodiments, authorization may be performed by the access network device.

In some embodiments, the access network device performs authorization, and the terminal sends an authorization request to the access network device.

In some embodiments, authorization may be performed by the core network device.

In some embodiments, the core network device performs authorization, and the terminal sends an authorization request to the access network device.

In **step S2107a,** the access network device sends authorization information.

In some embodiments, the access network device performs authorization, and authorizes the terminal as a reader, and the access network device sends the authorization information to the terminal to indicate that the terminal is authorized as a reader.

In some embodiments, the access network device performs authorization, and does not authorize the terminal as a reader, and the access network device sends unauthorized information to the terminal to indicate that the terminal is not authorized as a reader.

In some embodiments, the access network device configures the authorized IoT task of the terminal. The authorized IoT task is indicated by the authorization information.

In **step S2107b,** the core network device sends authorization information.

In some embodiments, the core network device performs authorization, and authorizes the terminal as a reader, and the core network device sends authorization information to the terminal to indicate that the terminal is authorized as a reader.

In some embodiments, the core network device performs authorization, and does not authorize the terminal as a reader, and the core network device sends unauthorized information to the terminal to indicate that the terminal is not authorized as a reader.

In some embodiments, the core network device configures the authorized IoT task of the terminal. The authorized IoT task is indicated by authorization information.

In some embodiments, step S2107a or step 2107b may be performed before or after any step of step 2101 to step 2105.

In some embodiments, step S2107a and step S2107b may be performed alternatively.

In some embodiments, the term "information" can be interchangeably with terms such as "message", "signal", "signaling", "report", "configuration", "indication", "instruction", "command", "channel", "parameter", "field", and "data".

In some embodiments, the term "send" can be interchangeable with terms such as "emit", "report", and "transmit".

The information transmission method involved in the embodiments of the present disclosure may include at least one of steps S2101 to S2107 (S2107a or S2107b). For example, step S2101 may be implemented as an independent embodiment, step S2103 may be implemented as an independent embodiment, step S2104 may be implemented as an independent embodiment, step S2105 may be implemented as an independent embodiment, and step S2106 may be implemented as an independent embodiment. Step S2107 may be implemented as an independent embodiment.

For example, step S2102 combined with steps S2103 to 2107 can be implemented as an independent embodiment. Steps S2101 to S2105 can be implemented as an independent embodiment, but are not limited thereto.

In some embodiments, step S2101, step S2106, and step S2107 are optional, and one or more of these steps may be omitted or replaced in different embodiments.

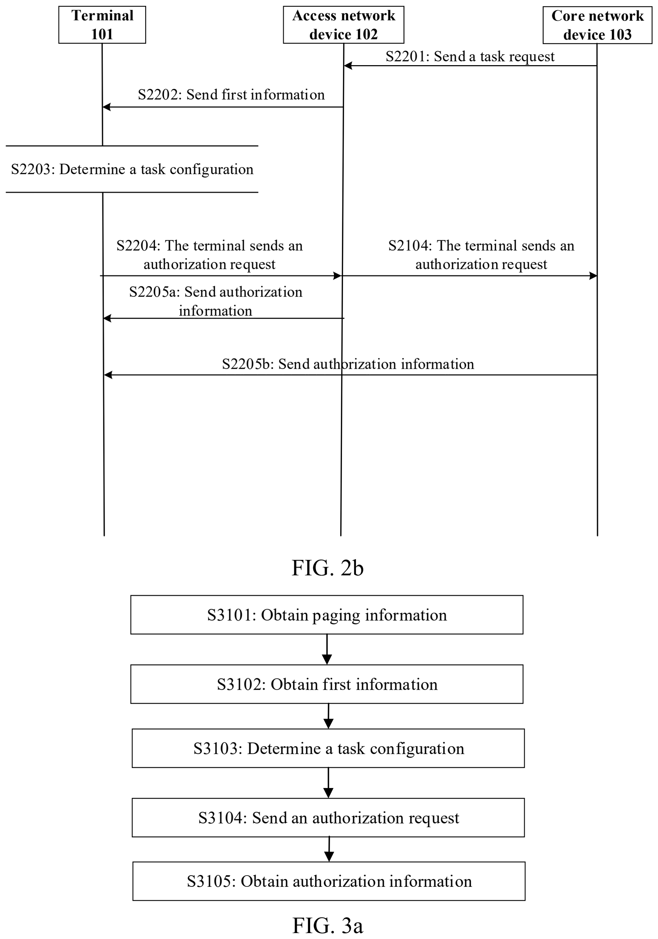

FIG. 2b is an interactive schematic diagram of an information transmission method according to an embodiment of the present disclosure. As shown in FIG. 2b, the embodiment of the present disclosure relates to an information transmission method, which is used in the communication system 100, and the method includes the following steps.

In **step S2201,** the core network device sends a task request to the access network device.

In some embodiments, the access network device receives a task request sent by the core network device.

In some embodiments, the access network device may include: a base station.

In some embodiments, the task request is associated with an IoT task.

In some embodiments, the IoT task includes, but is not limited to, requiring reporting of ambient IOT data.

In some embodiments, when the core network device has a requirement relating to triggering to report ambient IOT data, it sends a task request to the access network device.

In some embodiments, the task request is used to trigger the access network device to send the first information to the terminal.

In some embodiments, the external IoT task function sends an IoT task request to the core network device, and the core network device sends a task request to the access network device based on the IoT task request.

In some embodiments, the external IoT task function may be an external IoT task server.

In some embodiments, the core network device sends a task request indicating at least one of the following: an IoT task, a terminal identifier associated with the IoT task, and whether the IoT task allows the terminal to execute in an RRC non-connected state.

In **step S2202,** the access network device sends first information.

In some embodiments, the terminal receives first information sent by the access network device.

In some embodiments, the first information is used to indicate a task configuration of the IoT task.

In some embodiments, the IoT task is executed when the terminal is at least in an RRC non-connected state.

In some embodiments, the IoT task is executed when the terminal is in an RRC non-connected state.

In some embodiments, the data obtained by executing the IoT task when the terminal is in an RRC non-connected state can be reported to the network side (access network device and/or core network device) after the terminal switches to an RRC connected state.

The terminal can be in an RRC non-connected state when executing the IoT task, thereby reducing the power consumption caused by the terminal executing the IoT task in an RRC connected state. Rapid and low-cost deployment of passive Internet of Things is achieved through the terminal. In some embodiments, the terminal is associated with a reader of backscatter transmission in the IoT task.

In some embodiments, the terminal is associated with a reader of backscatter transmission in an IoT task, including at least one of the following: the terminal is authorized to be a reader; the terminal expects or agrees to be a reader; the terminal supports becoming a reader; the terminal signs up to become a reader of backscatter communication.

In some embodiments, the access network device and/or the core network device may authorize the terminal to become a reader.

In some embodiments, the terminal may indicate to the access network or the core network in the RRC connected state that the terminal agrees or expects to become a reader.

In some embodiments, the terminal indicates to the access network or the core network that the terminal has the capability of becoming a reader, that is, supports becoming a reader.

In some embodiments, the terminal may sign up as a reader of scatter communication during the registration process to the network.

In some embodiments, the terminal may sign up to become a reader of scatter communication after the registration process to the network.

In some embodiments, the reader is used for at least one of the following: sending an excitation signal of the backscatter transmission; receiving a backscatter signal of the backscatter transmission, and determining the data information carried by the backscatter signal; and transmitting the data information carried by the backscatter signal.

In some embodiments, the RRC non-connected state includes: an RRC idle state and/or an RRC inactive state.

In some embodiments, the IoT task may include at least one of the following:
the terminal sending an excitation signal to an ambient IOT device (referred to as IoT device);
the terminal receiving data information sent by the IoT device;
the terminal sending data information obtained from the IoT device to the network side (access network device and/or core network device).

In some embodiments, ambient IoT data may be acquired by the IoT device.

In some embodiments, the IoT device includes at least one of the following: a tag device, a sensor device, etc.

In some embodiments, the terminal is used to send an excitation signal to the IoT device and receive a backscatter signal sent by the IoT device based on the excitation signal.

In some embodiments, the IoT device is configured to send a backscatter signal based on the excitation signal sent by the terminal.

In some embodiments, the frequency band of the excitation signal sent by the terminal belongs to the frequency band of cellular mobile communication.

In some embodiments, the excitation signal may provide energy to the IoT device for backscatter.

In some embodiments, the access network device sends a dedicated signaling carrying the first information.

In some embodiments, the dedicated signaling is received by a terminal in an RRC connected state.

In some embodiments, the dedicated signaling includes: RRC signaling.

In some embodiments, the RRC signaling includes: an RRC release message.

In some embodiments, the access network device determines that the terminal is associated with an IoT task and sends first information to the terminal via dedicated signaling.

In some embodiments, the task configuration includes at least one of the following: a task identifier of the IoT task; an execution time configuration of the IoT task; an identifier of the IoT device associated with the IoT task; an indication of allowing the terminal in the RRC non-connected state to execute the IoT task; an indication of the data transmission delay sensitivity of the IoT task; and a communication resource configuration of the communication cell associated with the IoT task.

In some embodiments, the execution time configuration of the IoT task includes at least one of the following: start time of the IoT task, end time of the IoT task.

In some embodiments, the indication of data transmission delay sensitivity of the IoT task is used to indicate at least one of the following: whether the delay of data reporting of the IoT task is sensitive, and a delay level of data reporting of the IoT task.

In some embodiments, the communication cell associated with the IoT task may be an area that the terminal can cover as a reader.

In some embodiments, the communication resource configuration of the communication cell associated with the IoT task includes at least one of the following:
identification information of the communication cell;
frequency information of the communication cell;
spectrum range information of the communication cell;
channel information of the communication cell;
sub-channel configuration information of the communication cell.

In some embodiments, after becoming a reader, the terminal may broadcast the communication resource configuration of the communication cell associated with the IoT task to the IoT device for communication between the IoT device and the terminal.

In some embodiments, the indication of allowing the terminal in the RRC non-connected state to execute the IoT task may use different values to indicate whether the IoT task is allowed to be executed by the UE in the non-connected state.

In some embodiments, step S2101 is omitted, and the access network device autonomously sends the function indicated by the first information.

In **step S2203,** the terminal determines the task configuration.

In some embodiments, the terminal determines the task configuration based on an indication of the first information.

In some embodiments, based on the task configuration, the terminal may execute the IoT task configured by the task configuration in the RRC non-connected state.

In some embodiments, based on the task configuration, the terminal may also execute the IoT task configured by the task configuration in the RRC non-connected state.

In some embodiments, the terminal executes the IoT task configured by the task configuration, obtains data sent by the IoT device, and sends the data to the network side (access network device or core network device).

In **step S2204,** the terminal sends an authorization request.

In some embodiments, the authorization request indicates at least one of: the terminal expects or agrees to become the reader; the terminal supports becoming a reader.

In some embodiments, authorization may be performed by the access network device.

In some embodiments, the access network device performs authorization, and the terminal sends an authorization request to the access network device.

In some embodiments, authorization may be performed by the core network device.

In some embodiments, the core network device performs authorization, and the terminal sends an authorization request to the access network device.

In **step S2205a,** the access network device sends authorization information.

In some embodiments, the access network device performs authorization, and authorizes the terminal as a reader, and the access network device sends authorization information to the terminal to indicate that the terminal is authorized as a reader.

In some embodiments, the access network device performs authorization, and does not authorize the terminal as a reader, and the access network device sends unauthorized information to the terminal to indicate that the terminal is not authorized as a reader.

In some embodiments, the access network device configures the authorized IoT task of the terminal. The authorized IoT task is indicated by authorization information.

In **step S2205b,** the core network device sends authorization information.

In some embodiments, the core network device performs authorization, and authorizes the terminal as a reader, and the core network device sends authorization information to the terminal to indicate that the terminal is authorized as a reader.

In some embodiments, the core network device performs authorization, and authorizes the terminal as a reader, and the core network device sends unauthorized information to the terminal to indicate that the terminal is not authorized as a reader.

In some embodiments, the core network device configures the authorized IoT task of the terminal. The authorized IoT task is indicated by the authorization information.

In some embodiments, step S2105a or step 2105b may be performed before or after any of step 2201 to step 2203.

In some embodiments, step S2105a and step S2105b may be performed alternatively.

In some embodiments, the term "information" can be interchangeably with terms such as "message", "signal", "signaling", "report", "configuration", "indication", "instruction", "command", "channel", "parameter", "field", and "data".

In some embodiments, the term "send" can be interchangeable with terms such as "emit", "report", and "transmit".

The information transmission method involved in the embodiment of the present disclosure may include at least one of steps S2201 to S2205 (S2205a or S2205b). For example, step S2201 can be implemented as an independent embodiment, step S2203 can be implemented as an independent embodiment, step S2204 can be implemented as an independent embodiment, and step S2205 can be implemented as an independent embodiment.

For example, a combination of step S2202 to step S2205 can be implemented as an independent embodiment. Step S2201 to step S2205 can be implemented as an independent embodiment, but are not limited thereto.

In some embodiments, step S2201, step S2204, and step S2205 are optional, and one or more of these steps may be omitted or replaced in different embodiments.

FIG. 3a is a flowchart of an information transmission method according to an embodiment of the present disclosure. As shown in FIG. 3a, the embodiment of the present disclosure relates to an information transmission method, which is performed by a terminal 101, and the method includes the following steps.

In **step S3101,** paging information is obtained.

In some embodiments, the optional implementation of step S3101 can refer to the optional implementation of step S2103 and step S2104 in FIG. 2a, and other related parts of the embodiment involved in FIG. 2a, which will not be repeated here.

In some embodiments, the terminal receives paging information sent by the access network device, but is not limited thereto, and may also receive first information sent by other entities.

In some embodiments, the terminal obtains paging information specified by the protocol.

In some embodiments, the terminal obtains paging information from an upper layer(s).

In some embodiments, the terminal performs processing to obtain the first information.

In some embodiments, step S3101 is omitted, and the terminal autonomously implements the function indicated by the paging information, or the above function is default or acquiescent.

In **step S3102,** first information is obtained.

In some embodiments, the optional implementation of step S3102 can refer to the optional implementation of step S2102 in FIG. 2a and other related parts of the embodiment involved in FIG. 2a, which will not be repeated here.

In some embodiments, the terminal receives the first information sent by the access network device, but is not limited thereto, and may also receive the first information sent by other entities.

In some embodiments, the terminal obtains first information specified by the protocol.

In some embodiments, the terminal obtains the first information from an upper layer(s).

In some embodiments, the terminal performs processing to obtain the first information.

In some embodiments, step S3102 is omitted, the terminal autonomously implements the function indicated by the first information, or the above function is default or acquiescent.

In some embodiments, the execution order of step S3101 and step S3102 is not specific.

In **step S3103,** a task configuration is determined.

In some embodiments, the optional implementation of step S3103 can refer to the optional implementation of step S2105 in FIG. 2a and other related parts of the embodiment involved in FIG. 2a, which will not be repeated here.

In **step S3104,** an authorization request is sent.

In some embodiments, the optional implementation of step S3104 can refer to the optional implementation of step S2106 in FIG. 2a and other related parts of the embodiment involved in FIG. 2a, which will not be repeated here.

In **step S3105,** authorization information is obtained.

In some embodiments, the optional implementation of step S3105 can refer to the optional implementation of step S2107a or S2107b of FIG. 2a, and other related parts of the embodiment involved in FIG. 2a, which will not be repeated here.

In some embodiments, the terminal receives authorization information sent by an access network device or a core network device, but is not limited thereto, and may also receive fourth information sent by other entities.

In some embodiments, the terminal obtains fourth information specified by the protocol.

In some embodiments, the terminal obtains authorization information from an upper layer(s).

In some embodiments, the terminal performs processing to obtain the fourth information.

In some embodiments, step S3104 is omitted, and the terminal autonomously implements the function indicated by the authorization information, or the above function is default or acquiescent.

The information transmission method involved in the embodiments of the present disclosure may include at least one of steps S3101 to S3104. For example, step S3101 can be implemented as an independent embodiment, step S3102 can be implemented as an independent embodiment, step S3103 can be implemented as an independent embodiment, and step S3104 can be implemented as an independent embodiment. For example, step S3101 combined with step S3102 and step S3103 can be implemented as an independent embodiment, and steps S3103 to S3104 can be implemented as an independent embodiment, but are not limited thereto.

In some embodiments, step S3104 and step S3105 are optional, and one or more of these steps may be omitted or replaced in different embodiments.

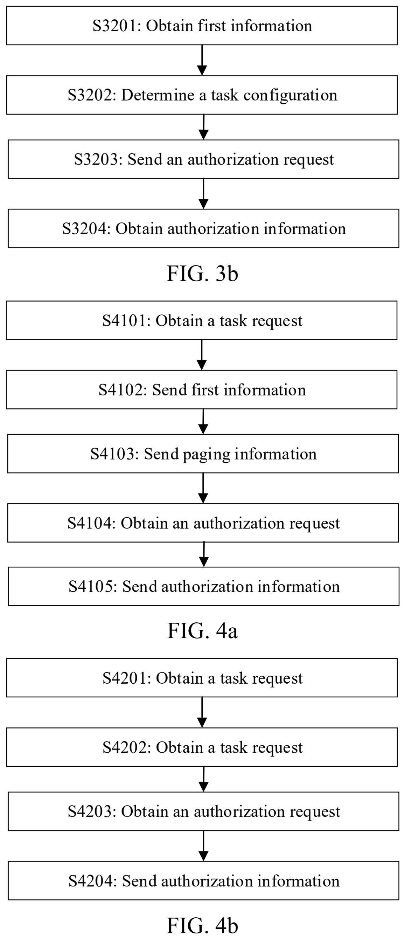

FIG. 3b is a flowchart of an information transmission method according to an embodiment of the present disclosure. As shown in FIG. 3b, the embodiment of the present disclosure relates to an information transmission method, which is performed by a terminal 101, and the method includes the following steps.

In **step S3201,** first information is obtained.

In some embodiments, the optional implementation of step S3201 can refer to the optional implementation of step S2202 in FIG. 2b and other related parts of the embodiment involved in FIG. 2b, which will not be repeated here.

In some embodiments, the terminal receives the first information sent by the access network device, but is not limited thereto, and may also receive the first information sent by other entities.

In some embodiments, the terminal obtains first information specified by the protocol.

In some embodiments, the terminal obtains the first information from an upper layer(s).

In some embodiments, the terminal performs processing to obtain the first information.

In some embodiments, step S3201 is omitted, the terminal autonomously implements the function indicated by the first information, or the above function is default or acquiescent.

In **step S3202,** a task configuration is determined.

In some embodiments, the optional implementation of step S3202 can refer to the optional implementation of step S2203 in FIG. 2b and other related parts of the embodiment involved in FIG. 2b, which will not be repeated here.

In **step S3203,** an authorization request is sent.

In some embodiments, the optional implementation of step S3203 can refer to the optional implementation of step S2204 in FIG. 2b and other related parts of the embodiment involved in FIG. 2b, which will not be repeated here.

In **step S3204,** authorization information is obtained.

In some embodiments, the optional implementation of step S3204 can refer to the optional implementation of step S2205a or S2205b of FIG. 2b, and other related parts of the embodiment involved in FIG. 2b, which will not be repeated here.

In some embodiments, the terminal obtains authorization information specified by the protocol.

In some embodiments, the terminal obtains authorization information from an upper layer(s).

In some embodiments, the terminal performs processing to obtain authorization information.

In some embodiments, step S3204 is omitted, and the terminal autonomously implements the function indicated by the authorization information, or the above function is default or acquiescent.

The information transmission method involved in the embodiment of the present disclosure may include at least one of step S3201 to step S3204. For example, step S3201 may be implemented as an independent embodiment, step S3203 may be implemented as an independent embodiment, and step S3204 may be implemented as an independent embodiment. For example, step S3201 combined with step S3202 can be implemented as an independent embodiment, and steps S3203 to S3204 can be implemented as an independent embodiment, but are not limited thereto.

In some embodiments, step S3203 and step S3204 are optional, and one or more of these steps may be omitted or replaced in different embodiments.

FIG. 4a is a flowchart of an information transmission method according to an embodiment of the present disclosure. As shown in FIG. 4a, the embodiment of the present disclosure relates to an information transmission method, which is performed by the access network device 102, and the method includes the following steps.

In **step S4101,** a task request is obtained.

In some embodiments, the optional implementation of step S4101 can refer to the optional implementation of step S2101 in FIG. 2a and other related parts of the embodiment involved in FIG. 2a, which will not be repeated here.

In some embodiments, the access network device receives the first information sent by the core network device, but is not limited thereto, and may also receive the first information sent by other entities.

In some embodiments, the access network device performs processing to obtain the first information.

In some embodiments, step 4101 is omitted, and the access network device autonomously implements the function indicated by the first information, or the above function is default or acquiescent.

In **step S4102,** first information is sent.

In some embodiments, the optional implementation of step S4102 can refer to the optional implementation of step S2102 in FIG. 2a and other related parts of the embodiment involved in FIG. 2a, which will not be repeated here.

In **step S4103,** paging information is sent.

In some embodiments, the optional implementation of step S4103 can refer to the optional implementation of step S2103 in FIG. 2a and other related parts of the embodiment involved in FIG. 2a, which will not be repeated here.

In some embodiments, the execution order of step S4102 and step S4103 is not specific.

In **step S4104,** an authorization request is obtained.

In some embodiments, the optional implementation of step S4104 can refer to the optional implementation of step S2106 in FIG. 2a and other related parts of the embodiment involved in FIG. 2a, which will not be repeated here.

In some embodiments, the access network device receives an authorization request sent by a terminal, but is not limited thereto, and may also receive first information sent by other entities.

In **step S4105,** authorization information is sent.

In some embodiments, the optional implementation of step S4105 can refer to the optional implementation of step S2107a in FIG. 2a and other related parts of the embodiment involved in FIG. 2a, which will not be repeated here.

The information transmission method involved in the embodiments of the present disclosure may include at least one of steps S4101 to S4105. For example, step S4101 can be implemented as an independent embodiment, step S4102 can be implemented as an independent embodiment, step S4103 can be implemented as an independent embodiment, step S4104 can be implemented as an independent embodiment, and step S4105 can be implemented as an independent embodiment. For example, step S4101 combined with step S4102 and step S4103 can be implemented as an independent embodiment, and steps S4104 to S4105 can be implemented as an independent embodiment, but are not limited thereto.

In some embodiments, step S4101, step S4104, and step S4105 are optional, and one or more of these steps may be omitted or replaced in different embodiments.

FIG. 4b is a flowchart of an information transmission method according to an embodiment of the present disclosure. As shown in FIG. 4b, the embodiment of the present disclosure relates to an information transmission method, which is performed by the access network device 102, and the method includes the following steps.

In **step S4201,** a task request is obtained.

In some embodiments, the optional implementation of step S4201 can refer to the optional implementation of step S2201 in FIG. 2b and other related parts of the embodiment involved in FIG. 2b, which will not be repeated here.

In some embodiments, the access network device receives the first information sent by the core network device, but is not limited thereto, and may also receive the first information sent by other entities.

In some embodiments, the access network device performs processing to obtain the first information.

In some embodiments, step S4201 is omitted, and the access network device autonomously implements the function indicated by the first information, or the above function is default or acquiescent.

In **step S4202,** the first information is sent.

In some embodiments, the optional implementation of step S4202 can refer to the optional implementation of step S2202 in FIG. 2b and other related parts of the embodiment involved in FIG. 2b, which will not be repeated here.

In **step S4203,** an authorization request is obtained.

In some embodiments, the optional implementation of step S4204 can refer to the optional implementation of step S2204 in FIG. 2b and other related parts of the embodiment involved in FIG. 2b, which will not be repeated here.

In some embodiments, the access network device receives an authorization request sent by a terminal, but is not limited thereto, and may also receive first information sent by other entities.

In **step S4204,** authorization information is sent.

In some embodiments, the optional implementation of step S4205 can refer to the optional implementation of step S2205a in FIG. 2b and other related parts of the embodiment involved in FIG. 2b, which will not be repeated here.

The information transmission method involved in the embodiments of the present disclosure may include at least one of steps S4201 to S4204. For example, step S4201 can be implemented as an independent embodiment, step S4202 can be implemented as an independent embodiment, step S4203 can be implemented as an independent embodiment, and step S4204 can be implemented as an independent embodiment. For example, step S4201 combined with step S4202 can be implemented as an independent embodiment, and steps 420103 to 420104 can be implemented as an independent embodiment, but are not limited thereto.

In some embodiments, step S4201, step S4203, and step S4205 are optional, and one or more of these steps may be omitted or replaced in different embodiments.

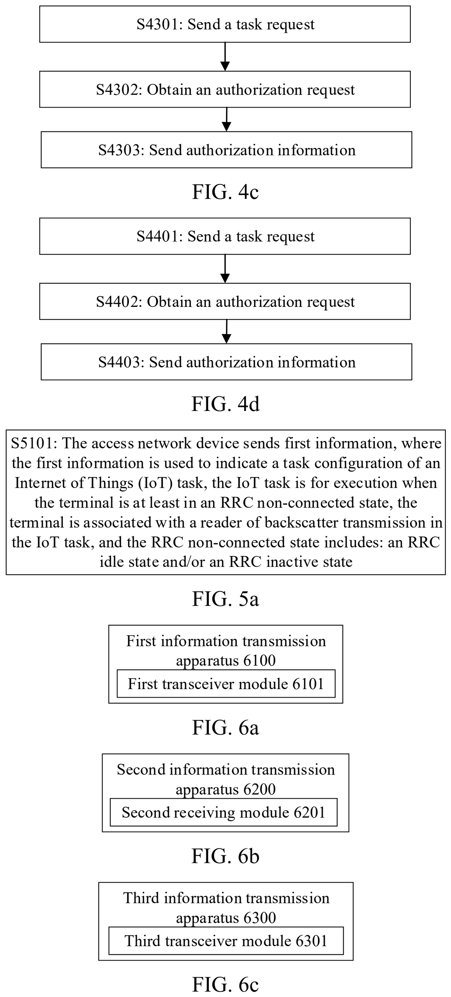

FIG. 4c is a flowchart of an information transmission method according to an embodiment of the present disclosure. As shown in FIG. 4c, the embodiment of the present disclosure relates to an information transmission method, which is performed by a core network device 103, and the method includes the following steps.

In **step S4301,** a task request is sent.

In some embodiments, the optional implementation of step S4301 can refer to the optional implementation of step S2101 in FIG. 2a and other related parts of the embodiment involved in FIG. 2a, which will not be repeated here.

In **step S4302,** an authorization request is obtained.

In some embodiments, the optional implementation of step S4302 can refer to the optional implementation of step S2106 in FIG. 2a and other related parts of the embodiment involved in FIG. 2a, which will not be repeated here.

In some embodiments, the core network device receives an authorization request sent by a terminal, but is not limited thereto, and may also receive first information sent by other entities.

In some embodiments, the core network device receives an authorization request of a terminal sent by an access network device, but is not limited thereto, and may also receive first information sent by other entities.

In **step S4303,** authorization information is sent.

In some embodiments, the optional implementation of step S4303 can refer to the optional implementation of step S2107b of FIG. 2a and other related parts of the embodiment involved in FIG. 2a, which will not be repeated here.

The information transmission method involved in the embodiment of the present disclosure may include at least one of step S4301 to step S4303. For example, step S4301 can be implemented as an independent embodiment, step S4302 can be implemented as an independent embodiment, and step S4303 can be implemented as an independent embodiment. For example, steps S4302 to S4303 can be implemented as an independent embodiment, but are not limited thereto.

FIG. 4d is a flowchart of an information transmission method according to an embodiment of the present disclosure. As shown in FIG. 4d, the embodiment of the present disclosure relates to an information transmission method, which is performed by the core network 103, and the method includes the following steps.

In **step S4401:** a task request is sent.

In some embodiments, the optional implementation of step S4401 can refer to the optional implementation of step S2201 in FIG. 2b and other related parts of the embodiment involved in FIG. 2b, which will not be repeated here.

In **step S4402,** an authorization request is obtained.

In some embodiments, the optional implementation of step S4402 can refer to the optional implementation of step S2204 in FIG. 2b and other related parts of the embodiment involved in FIG. 2b, which will not be repeated here.

In some embodiments, the core network device receives an authorization request sent by a terminal, but is not limited thereto, and may also receive first information sent by other entities.

In some embodiments, the core network device receives an authorization request of a terminal sent by an access network device, but is not limited thereto, and may also receive first information sent by other entities.

In **step S4403,** authorization information is sent.

In some embodiments, the optional implementation of step S4403 can refer to the optional implementation of step S2205b in FIG. 2b and other related parts of the embodiment involved in FIG. 2b, which will not be repeated here.

The information transmission method involved in the embodiment of the present disclosure may include at least one of step S4401 to step S4403. For example, step S4401 can be implemented as an independent embodiment, step S4402 can be implemented as an independent embodiment, and step S4403 can be implemented as an independent embodiment. For example, steps S4402 to S4403 can be implemented as an independent embodiment, but are not limited thereto.

FIG. 5a is an interactive schematic diagram of an information transmission method according to an embodiment of the present disclosure. As shown in FIG. 5a, the embodiment of the present disclosure relates to an information transmission method, which is used in a communication system 100, and the method includes one of the following steps.

In **step S5101,** the access network device sends first information, where the first information is used to indicate a task configuration of an Internet of Things (IoT) task, where the IoT task is for execution when the terminal is at least in an RRC non-connected state, where the terminal is associated with a reader of backscatter transmission in the IoT task, and the RRC non-connected state includes: an RRC idle state and/or an RRC inactive state.

For the optional implementation of step S5101, reference may be made to the optional implementation of step S2102 in FIG. 2a, step S2202 in FIG. 2b, step S3102 in FIG. 3a, step S3202 in FIG. 3b, step S4102 in FIG. 4a, step S4202 in FIG. 4b, and other related parts in the embodiments involved in FIGs. 2a, 2b, 3a, 3b, 4a, and 4b, which will not be repeated here.

In some embodiments, the above methods may include the methods of the above-mentioned communication system side, terminal side, access network device side, core network device side, etc., which will not be repeated here.

A specific example is provided below in combination with any of the above embodiments:
The obtaining of relevant configuration information (task configuration) of the terminal in the RRC idle state/the terminal in the RRC inactive state as a reader:
Option 1.1: the relevant configuration is obtained through system broadcast information.

When the network side has the requirement relevant to triggering reporting of ambient IOT data, the base station side broadcasts and releases the task information of ambient IOT through the system broadcast message, and notifies the terminal to obtain the system broadcast information through the paging message at the same time. The above two actions are in no particular order. The paging message may reuse the system broadcast change indication, or add new indication information, which is specifically used to indicate the release, update, and/or termination of the task information of ambient IOT. The added new indication information is stored in the paging DCI.

For UEs that support being a reader, and/or terminals that have signed a contract to agree to be a reader, after receiving the indication information in the paging message, they obtain the task information in the system broadcast and start executing the task. Or,

for UEs that support being a reader, and/or UEs that have agreed to act as a reader through RRC signaling or NAS signaling in the previous RRC connected state, after receiving the indication information in the paging message, they obtain the task information in the system broadcast and start executing the task.

Option 1.2: the relevant configuration is obtained through system broadcast information.

When the network side has a requirement relevant to triggering reporting of ambient IOT data, the base station side broadcasts and releases the task information of ambient IOT through a system broadcast message, and notifies the selected terminal to obtain the system broadcast information through a paging message at the same time. The above two actions are in no particular order. Before sending paging, the gNB obtains the id information of the target terminal in the paging message from the CN. The purpose of triggering paging in the future is to select the target terminal as the reader. The id information of the target terminal is carried in the paging message. At the same time, the id information of the terminal is also associated with one piece of indication information, which is used to indicate that the purpose of this paging of the terminal is to trigger the terminal to obtain the task information of ambient IOT.

For a UE that supports being a reader, and/or a terminal that has signed a contract to be a reader, after receiving the paging message containing its own id and associating with one piece of indication information, it obtains the task information in the system broadcast and starts to execute the task. Or,
for a UE that supports being a reader, and/or a UE that has agreed to act as a reader through RRC signaling or NAS signaling in the previous RRC connected state, after receiving the paging message containing its own id and associating with one piece of indication information, it obtains the task information in the system broadcast and starts to execute the task.

Option 2: the relevant configuration is obtained through dedicated signaling.

In the RRC connected state of the UE, the UE reports its capability to act as a reader and/or the terminal that has signed a contract to agree to act as a reader to the base station, or the base station receives information from the CN that the terminal has signed a contract to agree to act as a reader to the base station. The base station configures the configuration information about the ambient IOT task in the RRC dedicated signaling, such as the RRC Release message.

For all solutions, the configuration information of the ambient IOT task may include, but is not limited to:
a task id number of the ambient IOT task;
start time, and/or end time of the ambient IOT task;
target ambient IOT identification information of the ambient IOT task;
indication information that the ambient IOT task can be executed in the RRC idle state/RRC inactive state.
data reporting corresponding to the ambient IOT task, delay-insensitive indication information, etc.
cell information corresponding to delivering of the ambient IOT task, such as cell id information, frequency information or spectrum range information, channel information, sub-channel configuration information, etc.

The present disclosure proposes a configuration manner of using a terminal in the RRC idle state/a terminal in the RRC inactive as a UE reader, thereby realizing rapid and low-cost deployment of a passive Internet of Things and achieving the purpose of power saving of UE.

The embodiments of the present disclosure also provide an apparatus for implementing any of the above methods, for example, an apparatus is provided, and the above apparatus includes a unit or module for implementing each step performed by the terminal in any of the above methods. For another example, another apparatus is provided, including a unit or module for implementing each step performed by the network device (for example, the access network device, or the core network device, etc.) in any of the above methods.

It should be understood that the division of the units or modules in the above apparatus is only a division of logical functions, which can be fully or partially integrated into one physical entity or physically separated in actual implementation. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus, where the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be implemented by designing the hardware circuit. The above hardware circuit may be understood as one or more processors; for example, in one implementation, the hardware circuit is an application-specific integrated circuit (ASIC), and the functions of some or all of the above units or modules may be implemented by designing the logical relationship of the components in the circuit; for another example, in another implementation, the above hardware circuit may be implemented by a programmable logic device (PLD), and a Field Programmable Gate Array (FPGA) may be used as an example, which may include a large number of logic gate circuits, and the connection relationship between the logic gate circuits may be configured by the configuration file, thereby implementing the functions of some or all of the above units or modules. All units or modules of the above apparatus may be implemented in the form of software called by the processor, or in the form of hardware circuits, or in the form of software called by the processor, and the remaining part may be implemented in the form of hardware circuits.

In the embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it can also be a hardware circuit designed for artificial intelligence, which can be understood as an ASIC, such as a neural network processing unit (NPU), a tensor processing unit (TPU), a deep learning processing unit (DPU), etc.

FIG. 6a is a schematic diagram of the structure of the first information transmission apparatus provided by an embodiment of the present disclosure. As shown in FIG. 6a, the first information transmission apparatus 6100 includes: a first transceiver module 6101; the first receiving module 6101 is configured to send first information, and the first information is used to indicate the task configuration of the Internet of Things (IoT) task, where the IoT task is for the terminal to execute when it is at least in the RRC non-connected state, where the terminal is associated with the reader of the backscatter transmission in the IoT task, and the RRC non-connected state includes: RRC idle state and/or RRC inactive state. Optionally, the first receiving module 7101 is configured to execute the steps related to information sending and receiving performed by the access network device in any of the above information transmission methods, which will not be repeated here.

FIG. 6b is a schematic diagram of the structure of the second information transmission apparatus provided by an embodiment of the present disclosure. As shown in FIG. 6b, the second information transmission apparatus 6200 includes: a second receiving module 6201, configured to receive first information, where the first information is used to indicate the task configuration of the Internet of Things (IoT) task, where the IoT task is for the terminal to execute when it is at least in an RRC non-connected state, where the terminal is associated with a reader of backscatter transmission in the IoT task, and the RRC non-connected state includes: an RRC idle state and/or an RRC non-activated state. Optionally, the second receiving module 6201 is configured to execute the steps related to information sending and receiving executed by the terminal in any of the above information transmission methods, which will not be repeated here. Optionally, the second information transmission apparatus 6200 also includes a determination module, and the above-mentioned second determination module is configured to execute the steps related to determination executed by the terminal in any of the above methods, which will not be repeated here.

FIG. 6c is a schematic diagram of the structure of the third information transmission apparatus provided by the embodiment of the present disclosure. As shown in FIG. 6c, the third information transmission apparatus 6300 includes: a third transceiver module 6301, configured to send a task request associated with an IoT task, where the task request is used to trigger the access network device to send first information, and the first information is used to indicate the task configuration of the IoT task, where the IoT task is for the terminal to execute when at least it is in an RRC non-connected state, where the terminal is associated with a backscatter transmission in the IoT task, and the RRC non-connected state includes: RRC idle state and/or RRC inactive state. The third transceiver module 6301 is configured to execute the steps related to information sending and receiving performed by the core network device in any of the above information transmission methods, which will not be repeated here.

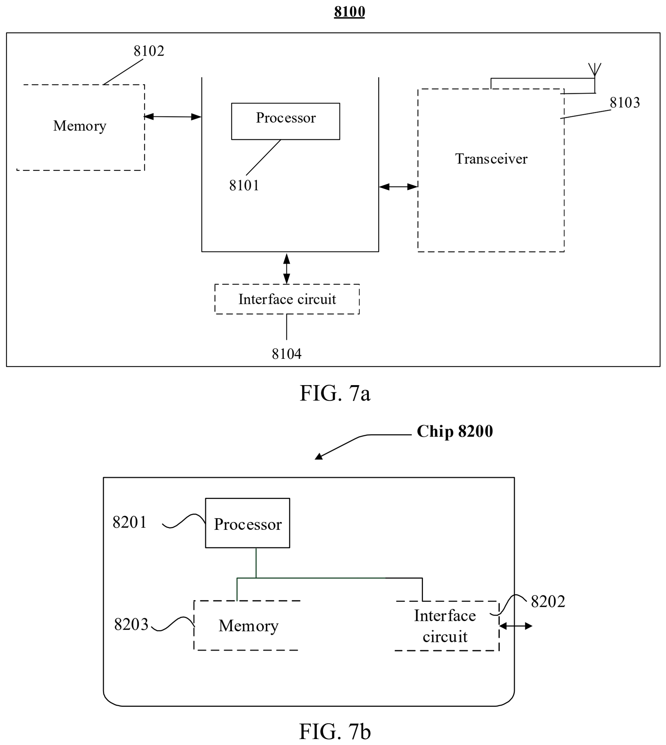

FIG. 7a is a schematic diagram of the structure of a communication device 8100 provided in an embodiment of the present disclosure. The communication device 8100 may be a network device (e.g., an access network device or a core network device, etc.), or a terminal (e.g., a user equipment, etc.), or a chip, a chip system, or a processor, etc. that supports a network device to implement any of the above methods, or a chip, a chip system, or a processor, etc. that supports a terminal to implement any of the above information transmission methods. The communication device 8100 may be used to implement the information transmission method described in the above method embodiments, and the details may refer to the description in the above method embodiments.

As shown in FIG. 7a, the communication device 8100 includes one or more processors 8101. The processor 8101 may be a general-purpose processor or a dedicated processor, for example, a baseband processor or a central processing unit. The baseband processor may be used to process the communication protocol and the communication data, and the central processing unit may be used to control the communication apparatus (such as a base station, a baseband chip, a terminal device, a terminal device chip, a DU or a CU, etc.), execute a program, and process the data of the program. The processor 8101 is used to call instructions so that the communication device 8100 performs any of the above information transmission methods.

In some embodiments, the communication device 8100 further includes one or more memories 8102 for storing instructions. Optionally, all or part of the memory 8102 may also be outside the communication device 8100.

In some embodiments, the communication device 8100 further includes one or more transceivers 8103. When the communication device 8100 includes one or more transceivers 8103, the communication steps such as sending and receiving in the above method are performed by the transceiver 8103, and the other steps are performed by the processor 8101.

In some embodiments, the transceiver may include a receiver and a transmitter, and the receiver and the transmitter may be separate or integrated. Optionally, the terms such as transceiver, transceiver unit, transceiver machine, transceiver circuit, etc. may be replaced with each other, the terms such as transmitter, transmission unit, transmitter machine, transmission circuit, etc. may be replaced with each other, and the terms such as receiver, receiving unit, receiver machine, receiving circuit, etc. may be replaced with each other.

Optionally, the communication device 8100 further includes one or more interface circuits 8104, which are connected to the memory 8102. The interface circuit 8104 can be used to receive signals from the memory 8102 or other apparatuses, and can be used to send signals to the memory 8102 or other apparatuses. For example, the interface circuit 8104 can read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited by FIG. 8a. The communication device may be an independent device or may be part of a relatively large device. For example, the communication device may be: (1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

FIG. 7b is a schematic diagram of the structure of a chip 8200 provided in an embodiment of the present disclosure. In the case where the communication device 8100 may be a chip or a chip system, reference may be made to the schematic diagram of the structure of the chip 8200 shown in FIG. 7b, but the present disclosure is not limited thereto.

The chip 8200 includes one or more processors 8201, and the processor 8201 is used to call instructions so that the chip 8200 executes any of the above information transmission methods.

In some embodiments, the chip 8200 further includes one or more interface circuits 8202, which are connected to the memory 8203. The interface circuit 8202 can be used to receive signals from the memory 8203 or other apparatuses, and the interface circuit 8202 can be used to send signals to the memory 8203 or other apparatuses. For example, the interface circuit 8202 can read the instructions stored in the memory 8203 and send the instructions to the processor 8201. Optionally, the terms such as interface circuit, interface, transceiver pin, and transceiver can be replaced with each other.

In some embodiments, the chip 8200 further includes one or more memories 8203 for storing instructions. Optionally, all or part of the memory 8203 may be outside the chip 8200.

The present disclosure also provides a storage medium, on which instructions are stored, and when the instructions are executed on the communication device 8100, the communication device 8100 executes any of the above methods. Optionally, the storage medium is an electronic storage medium. Optionally, the storage medium is a computer-readable storage medium, but it can also be a storage medium readable by other apparatuses. Optionally, the storage medium can be a non-transitory storage medium, but it can also be a temporary storage medium.

The present disclosure also provides a program product, and when the program product is executed by the communication device 8100, the communication device 8100 executes any one of the above information transmission methods. Optionally, the program product is a computer program product.

The present disclosure also provides a computer program, which, when executed on a computer, enables the computer to execute any one of the above information transmission methods.

Other implementations of the present disclosure may be readily thought of by those skilled in the art after considering the specification and practicing the contents disclosed herein. The present disclosure is intended to cover any variations, uses, or adaptations of the present disclosure, which follow the general principles of the present disclosure and include common knowledge or customary technical means in the technical field that are not disclosed in the present disclosure. The specification and embodiments are to be considered as exemplary only, and the true scope and spirit of the present disclosure are indicated by the following claims.

It should be understood that the present disclosure is not limited to the exact construction that has been described above and shown in the drawings and that various modifications and changes may be made without departing from the scope thereof. The scope of the present disclosure is limited only by the appended claims.

## Claims

1. An information transmission method, wherein the method is performed by an access network device, and the method comprises:
sending first information, wherein the first information is used to indicate a task configuration of an Internet of Things (IoT) task, the IoT task is for execution when a terminal is at least in an RRC non-connected state, the terminal is associated with a reader of backscatter transmission in the IoT task, and the RRC non-connected state comprises: an RRC idle state and/or an RRC inactive state.

2. The method according to claim 1, wherein sending the first information comprises at least one of:
sending a system message carrying the first information, wherein the system message is at least received by the terminal in the RRC non-connected state; and
sending a dedicated signaling carrying the first information, wherein the dedicated signaling is received by the terminal in an RRC connected state.

3. The method according to claim 2, further comprising:
sending paging information, wherein the paging information carries second information, and the second information is at least used to indicate the terminal in the RRC non-connected state to receive the first information carried by the system message.

4. The method according to claim 3, wherein
the paging information carries indication information indicating a terminal identifier, and the second information is at least used to indicate the terminal corresponding to the terminal identifier to receive the first information carried by the system message;
the paging information does not carry the indication information indicating the terminal identifier, and the second information is at least used to indicate all terminals that meet a predetermined condition to receive the first information carried in the system message.

5. The method according to claim 3, wherein
the terminal identifier associated with the IoT task is obtained from a core network device.

6. The method according to any one of claims 3 to 5, wherein the second information is further used to indicate a state of the first information, wherein the state of the first information comprises at least one of:
the first information is released;
the first information is updated; and
the first information terminates.

7. The method according to any one of claims 3 to 6, wherein the paging information comprises at least one of: paging downlink control information (DCI); and a paging message.

8. The method according to any one of claims 1 to 7, wherein sending the first information comprises:
receiving a task request associated with the IoT task sent by a core network device, and sending the first information.

9. The method according to any one of claims 1 to 8, wherein the task configuration comprises:
a task identifier of the IoT task;
an execution time configuration of the IoT task;
an identifier of an IoT device associated with the IoT task;
an indication of allowing the terminal in the RRC non-connected state to execute the IoT task;
an indication of data transmission delay sensitivity of the IoT task; and
a communication resource configuration of a communication cell associated with the IoT task.

10. The method according to any one of claims 1 to 9, wherein the terminal being associated with a reader of backscatter transmission in the IoT task and/or a terminal meeting a condition, comprises at least one of:
the terminal is authorized to be the reader;
the terminal expects or agrees to become the reader;
the terminal supports being the reader; and
the terminal signs up to be the reader.

11. The method according to any one of claims 1 to 10, further comprising:
receiving an authorization request reported by the terminal, wherein the authorization request indicates at least one of:
the terminal expects or agrees to become the reader; and
the terminal supports being the reader.

12. The method according to claim 11, further comprising:
sending authorization information to the terminal, wherein the authorization information indicates that the terminal is authorized to be the reader.

13. An information transmission method, wherein the method is performed by a terminal, and the method comprises:
receiving first information, wherein the first information is used to indicate a task configuration of an Internet of Things (IoT) task, the IoT task is for execution when the terminal is at least in an RRC non-connected state, the terminal is associated with a reader of backscatter transmission in the IoT task, and the RRC non-connected state comprises: an RRC idle state and/or an RRC inactive state.

14. The method according to claim 13, wherein receiving the first information comprises at least one of:
receiving a system message carrying the first information, wherein the system message is at least received by the terminal in the RRC non-connected state; and
receiving dedicated signaling carrying the first information, wherein the dedicated signaling is received by the terminal in an RRC connected state.

15. The method according to claim 14, further comprising:
receiving paging information, wherein the paging information carries second information, and the second information is at least used to indicate the terminal in the RRC non-connected state to receive the first information carried by the system message.

16. The method according to claim 15, wherein
the paging information carries indication information indicating a terminal identifier, and the second information is at least used to indicate the terminal corresponding to the terminal identifier to receive the first information carried by the system message;
the paging information does not carry the indication information indicating the terminal identifier, and the second information is at least used to indicate all terminals that meet a predetermined condition to receive the first information carried in the system message.

17. The method according to claim 15, wherein
the terminal identifier is obtained by an access network device from a core network device, and the terminal identifier is associated with the IoT task.

18. The method according to any one of claims 15 to 17, wherein the second information is further used to indicate a state of the first information, wherein the state of the first information comprises at least one of:
the first information is released;
the first information is updated; and
the first information terminates.

19. The method according to any one of claims 15 to 18, wherein the paging information comprises at least one of: paging downlink control information (DCI); and a paging message.

20. The method according to any one of claims 13 to 19, wherein the task configuration comprises:
a task identifier of the IoT task;
an execution time configuration of the IoT task;
an identifier of an IoT device associated with the IoT task;
an indication of allowing the terminal in the RRC non-connected state to execute the IoT task;
an indication of data transmission delay sensitivity of the IoT task; and
a communication resource configuration of a communication cell associated with the IoT task.

21. The method according to any one of claims 13 to 20, wherein the terminal being associated with the reader of backscatter transmission in the IoT task and/or a terminal meeting a condition, comprises at least one of:
the terminal is authorized to be the reader;
the terminal expects or agrees to become the reader;
the terminal supports being the reader;
the terminal signs up to be the reader.

22. The method according to any one of claims 13 to 21, further comprising:
sending an authorization request to an access network device or a core network device, wherein the authorization request indicates at least one of:
the terminal expects or agrees to become the reader; and
the terminal supports being the reader.

23. The method according to claim 22, further comprising:
receiving authorization information sent by the access network device or the core network device, wherein the authorization information indicates that the terminal is authorized to be the reader.

24. An information transmission method, wherein the method is performed by a core network device, and the method comprises:
sending a task request associated with an IoT task, wherein the task request is used to trigger an access network device to send first information, and the first information is used to indicate a task configuration of an Internet of Things (IoT) task, wherein the IoT task is for execution when a terminal is at least in an RRC non-connected state, the terminal is associated with a reader of backscatter transmission in the IoT task, and the RRC non-connected state comprises: an RRC idle state and/or an RRC inactive state.

25. The method according to claim 24, wherein the first information is carried in at least one of:
a system message, wherein the system message is at least received by the terminal in the RRC non-connected state; and
a dedicated signaling, wherein the dedicated signaling is received by the terminal in an RRC connected state.

26. The method according to claim 25, wherein
the task request is used to trigger the access network device to send paging information, wherein the paging information carries second information, and the second information is at least used to indicate the terminal in the RRC non-connected state to receive the first information carried by the system message.

27. The method according to claim 26, wherein
the paging information carries indication information indicating a terminal identifier, and the second information is at least used to indicate the terminal corresponding to the terminal identifier to receive the first information carried by the system message;
the paging information does not carry the indication information indicating the terminal identifier, and the second information is at least used to indicate all terminals that meet a predetermined condition to receive the first information carried in the system message.

28. The method according to claim 26, wherein
the terminal identifier is obtained by the access network device from the core network device, and the terminal identifier is associated with the IoT task.

29. The method according to any one of claims 26 to 28, wherein the second information is further used to indicate a state of the first information, wherein the state of the first information comprises at least one of:
the first information is released;
the first information is updated; and
the first information terminates.

30. The method according to any one of claims 26 to 29, wherein the paging information comprises at least one of: paging downlink control information (DCI); and a paging message.

31. The method according to any one of claims 24 to 30, wherein the task configuration comprises:
a task identifier of the IoT task;
an execution time configuration of the IoT task;
an identifier of an IoT device associated with the IoT task;
an indication of allowing the terminal in the RRC non-connected state to execute the IoT task;
an indication of data transmission delay sensitivity of the IoT task; and
a communication resource configuration of a communication cell associated with the IoT task.

32. The method according to any one of claims 24 to 31, wherein the terminal being associated with a reader of backscatter transmission in the IoT task and/or a terminal meeting a predetermined condition, comprises at least one of:
the terminal is authorized to be the reader;
the terminal expects or agrees to become the reader;
the terminal supports being the reader; and
the terminal signs up to be the reader.

33. The method according to any one of claims 24 to 32, further comprising:
receiving an authorization request reported by the terminal, wherein the authorization request indicates at least one of:
the terminal expects or agrees to become the reader; and
the terminal supports being the reader.

34. The method according to any one of claims 24 to 33, further comprising:
sending authorization information to the terminal, wherein the authorization information indicates that the terminal is authorized to be the reader.

35. An information transmission method, wherein the method is performed by a communication system, and the method comprises:
an access network device sending first information, wherein the first information is used to indicate a task configuration of an Internet of Things (IoT) task, the IoT task is for execution when a terminal is at least in an RRC non-connected state, the terminal is associated with a reader of backscatter transmission in the IoT task, and the RRC non-connected state comprises: an RRC idle state and/or an RRC inactive state.

36. A first information transmission apparatus, wherein the first information transmission apparatus comprises:
a first transceiver module, configured to send first information, wherein the first information is used to indicate a task configuration of an Internet of Things (IoT) task, the IoT task is for execution when a terminal is at least in an RRC non-connected state, the terminal is associated with a reader of backscatter transmission in the IoT task, and the RRC non-connected state comprises: an RRC idle state and/or an RRC inactive state.

37. A second information transmission apparatus, wherein the second information transmission apparatus comprises:
a second transceiver module, configured to receive first information, wherein the first information is used to indicate a task configuration of an Internet of Things (IoT) task, the IoT task is for execution when a terminal is at least in an RRC non-connected state, the terminal is associated with a reader of backscatter transmission in the IoT task, and the RRC non-connected state comprises: an RRC idle state and/or an RRC inactive state.

38. A third information transmission apparatus, wherein the third information transmission apparatus comprises:
a third transceiver module, configured to send a task request associated with an IoT task, wherein the task request is used to trigger an access network device to send first information, and the first information is used to indicate a task configuration of the Internet of Things (IoT) task, wherein the IoT task is for execution when a terminal is at least in an RRC non-connected state, the terminal is associated with a reader of backscatter transmission in the IoT task, and the RRC non-connected state comprises: an RRC idle state and/or an RRC inactive state.

39. A communication system, wherein the information transmission system comprises a terminal, an access network device and a core network device; the access network device is configured to implement the information transmission method according to any one of claims 1 to 12, the terminal is configured to implement the information transmission method according to any one of claims 13 to 23, and the core network device is configured to implement the information transmission method according to any one of claims 24 to 34.

40. A communication device, wherein the communication device comprises:
one or more processors;
wherein the processor is configured to call instructions so that the communication device performs the information transmission method according to any one of claims 1 to 12, claims 13 to 23, and claims 24 to 34.

41. A storage medium, wherein the storage medium stores instructions, and when the instructions are executed on a communication device, the communication device performs the information transmission method according to any one of claims 1 to 12, claims 13 to 23, and claims 24 to 34.
